# EUROPÄISCHE PATENTSCHRIFT

(11) **EP 2 651 701 B1**
(45) Veröffentlichungstag und Bekanntmachung des Hinweises auf die Patenterteilung: **23.05.2018**
(21) Anmeldenummer: 11794187.2
(22) Anmeldetag: 13.12.2011
(51) Int. Cl.: B60R 25/02

(54) **MECHANISCHE VERRIEGELUNGSVORRICHTUNG FÜR EIN MOTORRAD**
MECHANICAL LOCKING DEVICE FOR A MOTORCYCLE
DISPOSITIF DE VERROUILLAGE MÉCANIQUE POUR MOTOCYCLE

(30) Priorität: 13.12.2010 DE 102010061192
(43) Veröffentlichungstag der Anmeldung: 23.10.2013
(73) Patentinhaber: Huf Hülsbeck & Fürst GmbH & Co. KG, 42551 Velbert (DE)
(72) Erfinder: THRONBERENS, Stefan, 86559 Adelzhausen (DE); INDINGER, Max, 82131 Gauting (DE)
(86) Internationale Anmeldenummer: PCT/EP2011/072607
(87) Internationale Veröffentlichungsnummer: WO 2012/080247

(56) Entgegenhaltungen:
- EP-A2- 1 975 049
- DE-A1-102004 063 240
- US-A1- 2004 239 484

## Beschreibung

Die vorliegende Erfindung bezieht sich auf eine Verriegelungsvorrichtung für ein Funktionsbauteil eines Fahrzeugs, insbesondere eines Lenkers oder einer Schaltraste eines Motorrads, gemäß des Oberbegriffs von Anspruch 1. Derartige Verriegelungsvorrichtungen dienen zur Sicherung des Fahrzeugs gegen Diebstahl und/oder eine unberechtigte Benutzung, indem sie das funktionswesentliche Bauteil (auch Funktionsbauteil genannt) in gesicherter Stellung mittels eines beweglichen Sperrbolzens form- und/oder kraftschlüssig verriegeln. Zu diesem Zweck weist die Verriegelungsvorrichtung ein Betätigungselement auf, das mit einem Übertragungselement in Wirkverbindung bringbar ist, einen Sperrbolzen zum Ver- und Entriegeln des Funktionsbauteils des Fahrzeugs, der ebenfalls mit dem Übertragungselement in Wirkverbindung steht, eine Sende-/Empfangseinheit, die einen Datenaustausch mit wenigstens einem mobilen ID-Geber ermöglicht, um eine Authentisierungsabfrage des ID-Gebers durchzuführen, wobei nach einer erfolgreichen Authentisierungsabfrage des ID-Gebers durch die Sende-/Empfangseinheit eine Arretierung zwischen dem Betätigungselement und dem Sperrbolzen mittels eines Arretierriegels aufgehoben wird.

Ferner ist die Erfindung auch auf ein Verfahren zum Betrieb einer Verriegelungsvorrichtung für ein Funktionsbauteil eines Fahrzeugs gemäß des Verfahrensanspruchs gerichtet.

Aus dem Stand der Technik ist eine Verriegelungsvorrichtung für ein Funktionsbauteil eines Fahrzeugs aus der Druckschrift DE 10 2004 063 240 A1 bekannt. Auch diese Verriegelungsvorrichtung weist ein Betätigungselement und einen Sperrbolzen zum Ver- und Entriegeln des Funktionsbauteils des Fahrzeugs auf, die ebenfalls mit einem Übertragungselement in Wirkverbindung stehen, und eine Sende-/Empfangseinheit zur Authentisierungsabfrage eines ID-Gebers. Die DE 10 2004 063 240 A1 offenbart eine elektromechanische Steuerung der Verriegelungsvorrichtung, wobei das Betätigungselement zum Ausführen der Betätigungskraft eines Benutzers vorgesehen ist. Dabei muss der Benutzer teilweise das Betätigungselement zur Bedienung eindrücken und gleichzeitig eine Drehbewegung des Betätigungselements ausführen. Insbesondere im Winter, wenn der Benutzer Handschuhe trägt, ist eine solche Handhabung des Betätigungselements für einen Handschuhträger unbequem durchzuführen. Außerdem entspricht die erforderliche Bedienung nicht dem gewöhnlichen Bedienungsablauf bei der Ver- bzw. Entriegelung von Lenkern von Motorrädern.

Aus der EP 1 975 049 A2 ist eine Verriegelungsvorrichtung für eine Lenkeinrichtung bekannt, welche einen Verriegelungspin aufweist, der sich zwischen einer verriegelten Position und einer entriegelten Position als Antwort auf die Betätigung eines Bedienelements bewegen kann.

Somit ist es Aufgabe der vorliegenden Erfindung, eine Verriegelungsvorrichtung für Fahrzeuge zu schaffen, bei der der Entriegelungsvorgang im Wesentlichen handlich und mühelos für einen Handschuhträger verläuft. Trotzdem soll bei der Verriegelungsvorrichtung nicht auf den Einsatz und die damit verbundenen Vorteile eines drehbaren Betätigungselements verzichtet werden, um den herkömmlichen gewohnten Ablauf der Bedienung eines funktionswesentlichen Bauteils im Fahrzeug zu bewahren.

Diese Aufgabe wird durch sämtliche Merkmale des unabhängigen Anspruches 1 gelöst. Vorteilhafte Weiterbildungen der Erfindung sind in den abhängigen Ansprüchen und der weiteren Beschreibung angegeben.

An dieser Stelle sei erwähnt, dass die zuvor beschriebene Verriegelungsvorrichtung sowohl als "Active-Keyless" als auch "Passive-Keyless" Verriegelungsvorrichtung ausgestaltet sein kann. Bei der "Active-Keyless" Variante muss ein Bediener aktiv auf einen Knopf oder dergleichen bei seinem mobilen ID-Geber drücken, um die Authentisierungsabfrage mit der Sende-/Empfangseinheit zu starten, um überhaupt eine Ent-/ bzw. Verriegelung bewirken zu können. Im Gegensatz dazu ist es bei der "Passive-Keyless" Variante nicht für den Bediener erforderlich, eine aktive Handlung an dem ID-Geber vorzunehmen, da die Verriegelungsvorrichtung den ID-Geber selber erkennt und einen Datenaustausch über die Sende-/Empfangseinheit zur Authentisierungsabfrage einleitet.

Die Erfindung schließt ferner die technische Lehre ein, dass das Betätigungselement ein Drehmittel und ein, insbesondere separates Druckmittel aufweist, wobei durch eine Aufhebung der Arretierung bzw. Kopplung zwischen dem Betätigungselement und dem Sperrbolzen das Drehmittel in mindestens zwei stabile Stellungen, nämlich eine Ver- und eine Entriegelungsstellung bringbar ist, und wobei in der Verriegelungsstellung des Drehmittels der Sperrbolzen in eine Verriegelungsposition und in der Entriegelungsstellung des Drehmittels der Sperrbolzen in eine Entriegelungsposition mechanisch überführbar ist, und wobei das Druckmittel zum Starten eines Motors des Fahrzeugs vorgesehen ist, insbesondere wenn sich das Drehmittel in der Entriegelungsstellung befindet. Das Drehmittel und das Druckmittel selbst verursachen keine Längsverschiebung für das Übertragungselement in Richtung der Drehachse des Drehmittels, auch nicht durch einen Druck auf das Druckmittel. Das Druckmittel hat ausschließlich eine elektrische Funktion und dient ausschließlich zum Start des Motors und ist mechanisch von der Betätigungsmechanik für den Sperrbolzen komplett getrennt. Somit lässt sich eine besonders kompakte und solide Verriegelungsvorrichtung realisieren. Unter dem Starten des Motors wird das Einschalten der Zündung verstanden, wobei zusätzlich auch der Anlasser für den Motor eingeschaltet bzw. betätigt werden kann. Allerdings ist es auch denkbar, dass der Anlasser des Motors über einen separaten Starttaster /-schalter betätigt wird.

Die erfindungsgemäße Verriegelungsvorrichtung ist auch besonders sicher, da eine unzulässige Manipulation grundsätzlich nur über das Drehmittel möglich ist und nicht über das Druckmittel. Das Drehmittel ist jedoch durch den konkreten Aufbau der Verriegelungsvorrichtung, insbesondere den Einsatz des Arretierriegels optimal gegen derartige Manipulationen geschützt.

Bei der erfindungsgemäßen Verriegelungsvorrichtung kann es sich speziell um eine Motorrad-Verriegelungsvorrichtung insbesondere für den Motorradlenker handeln, die in der Regel nur eine oder maximal zwei Ausnehmungen für den Sperrbolzen in der Verriegelungsposition aufweist, so dass der Lenker in nur einer maximal zwei Positionen verriegelbar ist.

Besonders vorteilhaft ist dabei, dass ein Handschuhträger mit einem durch die Handschuhe eingeschränkten Tastsinn der Finger zwei Bewegungsabläufe, wie Drehen und Drücken, nicht gleichzeitig, sondern nacheinander schrittweise ausführen kann. Dabei wird der gewohnte Ablauf der Bedienung eines funktionswesentlichen Bauteils im Fahrzeug, insbesondere bei Motorädern, beibehalten, indem durch das Drehen des Drehmittels der Sperrriegel in seine Entriegelungsposition überführbar ist, in der das Funktionsbauteil mechanisch freigegeben ist, um es bewegen zu können. Auch kann zumindest teilweise ein Aktivieren der Fahrzeugelektronik durch das Drehen des Drehmittels erfolgen. Das Einschalten der Zündung des Motors kann durch Betätigung eines separat vom Drehmittel ausgeführten Druckmittels erfolgen. Hierbei kann das Druckmittel an dem Betätigungselement, an dem Lenker des funktionswesentlichen Bauteils des Motorrads oder beliebig an einem für den Benutzer leicht erreichbaren Bereich an dem Fahrzeug angeordnet sein. Bei einer besonders kompakten Ausführung der Erfindung, ist das Drehmittel zumindest teilweise oder auch ganz um das Druckmittel angeordnet. Trotzdem ist das Betätigungselement zumindest zweiteilig, nämlich als Dreh- und Druckmittel aufgebaut. Vorteilhafterweise kann ein Gehäuse vorgesehen sein, um die Verriegelungsvorrichtung sicher, z. B. gegen Aufbrüche, zu umschließen. Hierbei kann das Betätigungselement bezüglich des Gehäuses offen liegend angeordnet sein, damit das Drehmittel und das Druckmittel für den Fahrer des Fahrzeugs frei zugänglich sind. Durch das Gehäuse wird die Verriegelungsvorrichtung gerade bei einem Einsatz bei einem Motorrad vor Witterung geschützt, wobei das Betätigungselement außerhalb des Gehäuses angeordnet ist und für den Benutzer leicht zugänglich bleibt. Somit wird durch die Erfindung ein einfacher und bequemer Bedienungsablauf der Verriegelungsvorrichtung für einen Fahrzeugfahrer gewährleistet.

Die Erfindung geht dabei von dem Gedanken aus, dass die Entriegelung des Fahrzeugs bzw. der Verriegelungsvorrichtung nur durch eine autorisierte Person erfolgen kann. Zu diesem Zweck ist eine Sende-/Empfangseinheit vorgesehen, um eine Authentifizierungsabfrage durchzuführen und die Berechtigung einer Person zu verifizieren, die im Begriff ist, sich dem Fahrzeug zu nähern. Für diese Authentifizierungsabfrage muss die Sende-/Empfangseinheit bei der "Passive-Keyless" Variante geweckt werden, beispielsweise durch die Erkennung einer Annäherung eines Fahrers an das Fahrzeug. Hierzu kann ein Näherungssensor vorgesehen sein, der insbesondere in der Verriegelungsvorrichtung angeordnet ist, wobei die Sende-/Empfangseinheit geweckt wird, wenn der Näherungssensor einen ID-Geber und/oder einen Fahrer detektiert, um die Authentisierungsabfrage durchzuführen.

Ebenfalls kann die Sende-/Empfangseinheit bei der "Acitve-Keyless" Variante durch eine manuelle Betätigung, z. B. Drücken eines Tasters, Drehen eines Knopfes oder Betätigung bzw. Berührung eines Sensors geweckt werden, der in oder an der Verriegelungsvorrichtung, in deren Nähe oder am Lenker des Motorrads angeordnet sein kann. Vorteilhafterweise kann ein derartiger Taster seitlich an dem Drehmittel angeordnet sein, wobei ein Fahrer beim Greifen des Drehrings den Drucktaster automatisch betätigt. Es ist erfindungsgemäß auch vorgesehen, dass das Drehmittel des Betätigungselements mindestens eine instabile Weckstellung aufweist und selbst den Weckknopf darstellt, wobei durch eine Bewegung des Drehmittels in die instabile Weckstellung die Sende-/Empfangseinheit geweckt wird, um einen mobilen ID-Geber abzufragen. Die Sende-/Empfangseinheit stellt daraufhin einen Kontakt zu dem ID-Geber her, um die Zugangscodes zu überprüfen.

Um eine zuverlässige und sichere Funktionsweise der Verriegelungsvorrichtung sicherzustellen, wird das benutzerseitige Betätigungselement nur zur Bedienung durch eine rechtmäßig autorisierte Person freigegeben. Wenn der ID-Code vom ID-Geber der Person mit dem fahrzeugseitigen ID-Code übereinstimmt, wird die insbesondere formschlüssige Arretierung zwischen dem Betätigungselement und dem Sperrbolzen durch den Arretierungsriegel aufgehoben.

Erfindungsgemäß kann ein insbesondere bistabiler Hubmagnet vorgesehen sein, der, wenn das Drehmittel sich in der Verriegelungsstellung befindet, eine Drehbewegung des Drehmittels in die Entriegelungsstellung gegen eine unerlaubte Handhabung direkt oder indirekt blockiert. Sofern der Hubmagnet direkt die Arretierung bewirkt, stellt dieser gleichzeitig auch den Arretierriegel dar. Um die Lenkung zu entriegeln bzw. das Betätigungselement freizugeben, kann das Drehmittel beispielhaft in eine instabile Weckstellung bewegt werden, um eine Abfrage-Antwort Signalsequenz des ID-Codes zwischen der fahrzeugseitigen Sende-/Empfangseinheit und einem mobilen ID-Geber auszulösen. Nach einer erfolgreichen Authentisierungsabfrage des ID-Gebers anhand der Sende-/Empfangseinheit wird der Hubmagnet aktiviert, um die Drehung des Drehmittels in die Entriegelungsstellung freizugeben.

Eine weitere, die Erfindung verbessernde Maßnahme kann vorsehen, dass der Hubmagnet mit dem Arretierriegel derart zusammenwirkt, um eine Wirkverbindung zwischen dem Betätigungselement und dem Übertragungselement mittels des Arretierriegels freizugeben, wobei der Arretierriegel durch eine Federkraft belastet sein kann. Der Hubmagnet kann dabei zwei stabile Lagen aufweisen, nämlich eine Freigabelage und eine Arretierlage bezüglich des Arretierriegels. In einer Ausführungsform der Erfindung kann das Übertragungselement gegen eine unautorisierte Benutzung durch den Arretierriegel arretiert werden. Die Wirkverbindung zwischen dem Betätigungselement und dem Übertragungselement kann in diesem Fall bestehen bleiben, wobei die Übertragung der manuellen Handhabung des Betätigungselements an das Übertragungselement verhindert bzw. blockiert wird, solange das Übertragungselement durch den Arretierriegel arretiert ist. Das Übertragungselement ist erfindungsgemäß mit einem Kragenelement ausgeführt, das mit einer Öffnung und einer Steuerkurve zur formschlüssigen Aufnahme des Arretierriegels versehen ist. Des Weiteren kann das Drehmittel durch eine Feder belastet werden, um die Kraft der Benutzerhandhabung auszugleichen und eine abrupte Bewegung oder ungewollte Betätigung des Betätigungselements durch die Federspannung zu vermindern, indem die Feder Stöße bzw. Schwingungen abfängt. Bei der Realisierung der instabilen Weckstellung des Drehmittels kann die Feder die erforderliche Rückstellkraft erzeugen.

Erfindungsgemäß kann der Sperrbolzen durch das Übertragungselement, insbesondere mittels des zweiten Steuernockens zwischen der Ver- und Entriegelungsposition mechanisch zwangsgeführt sein. Folglich folgt der Sperrbolzen in jedem Fall der Bewegung des Übertragungselementes und behält immer seine relative Position zum Übertragungselement. Damit ist es aus geschlossen, dass der Sperrbolzen irgendwelche Zwischenpositionen einnimmt, die nicht gewollt sind. Z. B. kann das Drehmittel nicht in seine Verriegelungsstellung gedreht werden, wenn der Sperrbolzen nicht in eine Nut oder Ausnehmung von dem Funktionsbauteil trifft, da diese Position des Sperrbolzens eben nur eine Zwischenposition darstellt.

Vorteilhafterweise schaltet das Drehmittel in der Entriegelungsstellung, insbesondere über den Schalter, die Zündung des Motors ein. Die erfindungsgemäße Verriegelungsvorrichtung kann ferner eine Überlastkupplung zwischen dem Betätigungselement und dem Sperrbolzen aufweisen, insbesondere zwischen dem Betätigungselement und dem Übertragungselement, um ein gewaltsames Betätigen der Verriegelungsvorrichtung sicher zu verhindern und die Funktionsfähigkeit der Verriegelungsvorrichtung zu schützen. Bei einer Überschreitung eines eingestellten Drehmomentes für das Drehmittel wird durch die Überlastkupplung die Verbindung bzw. die Arretierung zwischen dem Betätigungselement und dem Übertragungselement selbstständig mechanisch getrennt.

Optional kann die Verriegelungsvorrichtung eine elektronische Schnittstelle zu einem Tankdeckel aufweisen, um den Tankdeckel für einen berechtigten Benutzer zu öffnen. Somit wird gewährleistet, dass der Tankdeckel nur nach Wunsch des Fahrers geöffnet wird und während der Fahrt immer verschlossen bleibt.

Des Weiteren kann die Verriegelungsvorrichtung einen Transponder, insbesondere eine Transponderspule vorzugsweise unter dem Drehmittel, aufweisen, um Energie zu dem ID-Geber zu übertragen, um den Datenaustausch zwischen der Sende-/Empfangseinheit und dem mobilen ID-Geber zu ermöglichen, wenn der ID-Geber nicht mehr über die erforderliche Energie verfügt, um somit trotzdem eine Authentifizierung bzw. Entriegelung zu ermöglichen. Befindet sich der ID-Geber im Nahfeld der Spule des Transponders, so induziert das magnetische Feld des Transponders eine Spannungsänderung an der entsprechenden Antenne bzw. Spule des ID-Gebers, um den ID-Geber mit der Energie zu versorgen.

Erfindungsgemäß wird die Aufgabe ebenfalls durch sämtliche Merkmale des unabhängigen Verfahrensanspruchs gelöst.

Erfindungsgemäß ist ein Verfahren zum Bedienen der vorliegenden Verriegelungsvorrichtung vorgesehen, welches folgende Schritte aufweist, die nachfolgend im Detail beschrieben werden. Eine Sende- und Empfangseinheit wird aktiviert, um eine Authentisierungsabfrage mit einem ID-Geber eines Benutzers durchzuführen, wenn beispielhaft durch einen Näherungssensor der potenzielle Benutzer erkannt wurde. Es ist auch denkbar, dass zum gezielten, ggf. manuellen Aktivieren der Sende- und Empfangseinheit ein Drucktaster oder ein kapazitiver Sensor (als Näherungssensor) am Betätigungselement vorgesehen sein kann. In einer alternativen Ausführungsform der Erfindung kann die Sende- und Empfangseinheit durch eine Drehung des Drehmittels in eine spezielle instabile Weckstellung aktiviert werden. Hierbei wird eine Authentisierungsabfrage durchgeführt, um die Berechtigung eines potenziellen Benutzers anhand seines ID-Gebers zu verifizieren. Nachdem die Berechtigung des Benutzers positiv verifiziert wurde, wird die Sperrung des Betätigungselements durch einen Arretierriegel und/oder einen Hubmagneten aufgehoben bzw. eine Betätigung des Sperrbolzens durch das Betätigungselement ermöglicht. Das erfindungsgemäße Betätigungselement, das ein Drehmittel und ein, insbesondere separates Druckmittel umfasst, wird nun zur Benutzung durch den autorisierten Benutzer freigegeben. Vorteilhafterweise kann dabei vorgesehen sein, dass zumindest ein Teil der Elektronik des Fahrzeugs, z. B. die Wegfahrsperre, eingeschaltet wird. Nachfolgend wird durch eine Drehung des Drehmittels in seine Entriegelungsstellung das Funktionsteil des Fahrzeugs entriegelt und gleichzeitig weitere Teile der Elektronik eingeschaltet. Somit wird der Zustand "Ein" bzw. "On" des Fahrzeugs erreicht. Abschließend wird der Motor des Fahrzeugs ausschließlich durch die Betätigung des separaten Druckmittels gestartet, in dem die Zündung eingeschaltet wird. Das Anlassen des Motors kann ebenfalls über das Druckmittel oder einen gesonderten Starttaster erfolgen. Ein Ausschalten des Motors kann beispielhaft durch einen erneuten Druck auf das Druckmittel, wodurch zunächst nur die Zündung ausgeschaltet werden kann, oder durch eine Drehung des Drehmittels zurück in die Verriegelungsstellung erreicht werden. Die Trennung von den zwei Bewegungsabläufen "Drücken" und "Drehen" ermöglicht eine einfache und bequeme Bedienung der Verriegelungsvorrichtung. Sogar für einen Benutzer, dessen Bewegungen beispielhaft durch Handschuhe eingeschränkt sind, sind die Schritte des Ein- und Ausschaltens sowie des Startens des Motors leicht ausführbar und entsprechen dem herkömmlichen Ablauf beim Entriegeln und Starten eines Fahrzeuges, insbesondere eines Motorrades.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein. Technische Merkmale von der erfindungsgemäßen Vorrichtung können auf das erfindungsgemäße Verfahren und umgekehrt übertragen werden. Es zeigen:
- Figur 1: eine dreidimensionale Ansicht der erfindungsgemäßen Verriegelungsvorrichtung;
- Figur 2: eine schematische Darstellung des erfindungsgemäßen Drehmittels;
- Figur 3: eine Detailansicht des erfindungsgemäßen Betätigungselements;
- Figur 4: eine Detailansicht des Übertragungselements mit einem ersten und einem zweiten Steuernocken;
- Figur 5: eine dreidimensionale Ansicht der erfindungsgemäßen Verriegelungsvorrichtung;
- Figur 6: eine Seitenansicht des erfindungsgemäßen Betätigungselements; und
- Figur 7: eine Draufsicht des erfindungsgemäßen Betätigungselements.

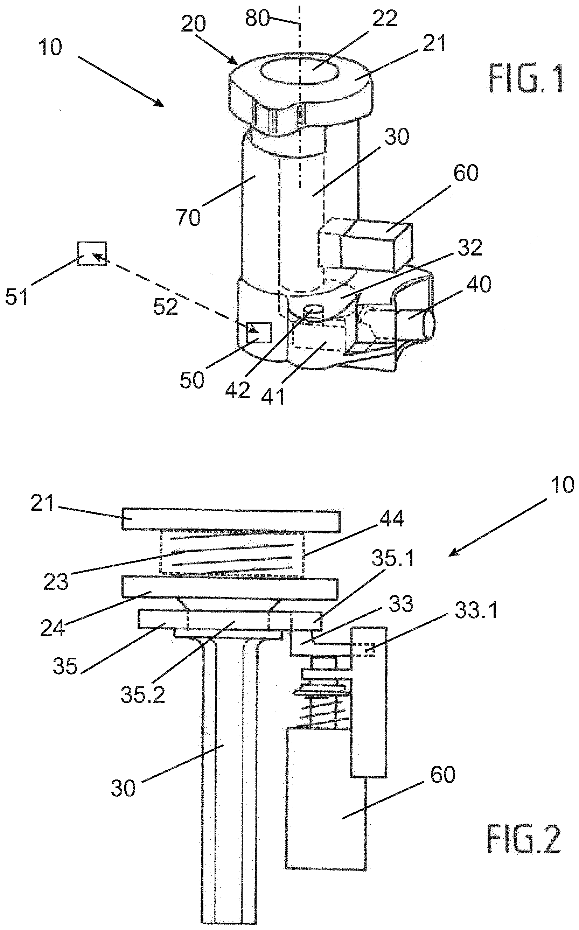

Figur 1 zeigt eine mögliche Ausführungsform der erfindungsgemäßen Verriegelungsvorrichtung 10. Die Verriegelungsvorrichtung 10 weist hierbei ein Betätigungselement 20 auf, das mit einem Drehmittel 21, das drehbar um eine Achse 80 gelagert ist, und mit einem Druckmittel 22 ausgeführt ist, das parallel zur Achse 80 durch Drücken betätigbar ist. Die Verriegelungsvorrichtung 10 weist ferner ein Übertragungselement 30 auf, das zwischen dem Betätigungselement 20 und einem Sperrbolzen 40 angeordnet ist. Das Übertragungselement 30 ist an seinem dem Betätigungselement 20 abgewandten Ende mit einem zweiten Steuernocken 32 versehen. Eine Steuerführung 42 ist unterhalb des zweiten Steuernockens 32 vorhanden, entlang welcher ein dem Übertragungselement 30 zugewandtes Ende des Sperrbolzens 40 zwangsgeführt wird. Dabei wirkt der Sperrbolzen 40 von einer Seite insbesondere formschlüssig mit einem Ende eines Schiebers 41 zusammen, wobei ein anderes Ende des Schiebers 41 in der Steuerführung 42 ebenfalls formschlüssig gehalten wird. Dieser Formschluss ist im vorliegenden Fall durch die bolzenförmige Steuerführung 42 zwischen dem zweiten Steuernocken 32 und dem Schieber 41 ausgebildet, die drehbar ausgestaltet ist. Zusätzlich ist ein Gehäuse 70 vorgesehen, um das Übertragungselement 30 der Verriegelungsvorrichtung 10 mit den Steuernocken 31, 32, den Schieber 41 und teilweise den Sperrbolzen zu umschließen und gegen ungewollte Angriffe zu schützen. Das Betätigungselement 20 ist bezüglich des Gehäuses 70 derart offen liegend angeordnet, dass das Drehmittel 21 und das Druckmittel 22 für den Fahrer des Fahrzeugs frei zugänglich sind. Eine Sende-/Empfangseinheit 50 steht mit einem ID-Geber 51 in einer Datenkommunikation 52, um deren Berechtigungscode abzufragen. Diese Sende-/Empfangseinheit 50 ist vorzugsweise innerhalb der Verriegelungsvorrichtung 10 angeordnet, um möglichst eine kompakte Baueinheit der Verriegelungsvorrichtung 10 zu realisieren, diese kann aber auch außerhalb an einer günstigen Stelle im Fahrzeug vorhanden sein.

Figur 2 offenbart eine schematische Seitenansicht der erfindungsgemäßen Verriegelungsvorrichtung 10 ohne Gehäuse 70, umfassend ein nur teilweise gezeigtes Drehmittel 21, ein Übertragungselement 30, einen Arretierriegel 33 und einen Hubmagnet 60. In der Figur 2 ist der untere Teil des Drehmittels 21 zu sehen, das durch eine Stützfeder 23 gegen abrupte Bewegungen und Drehungen gestützt ist. Das Drehmittel 21 und das Übertragungselement 30 sind mechanisch durch ein Verbindungsteil 24 miteinander verbunden, wobei das Verbindungsteil 24 im vorliegenden Fall einteilig zum Übertragungselement 30 ausgestaltet ist. Das Übertragungselement 30 weist ein Kragenelement 35 auf, das mit einer Öffnung 35.1 und einer Steuerkurve 35.2 (Öffnung 35.1 und Steuerkurve 35.2 sind in Fig. 2 nur gestrichelt angedeutet) an seiner Unterseite zum Aufnehmen des Arretierriegels 33 versehen ist. Das abgewinkelte Ende des Arretierriegels 33 greift in der Arretierlage in die Öffnung 35.1 des Kragenelements 35 ein und blockiert formschlüssig somit eine Drehung des Übertragungselements 30 und damit des Drehmittels 21. In der Freigabelage greift das abgewinkelte Ende des Arretierriegels 33 in die Steuerkurve 35.2 des Kragenelements 35 ein, so dass das Übertragungselement 30 und das Drehmittel 21 zumindest im Drehbereich der Steuerführung 35.2 freidrehbar sind. Der Hubmagnet 60 erzeugt im vorliegenden Fall aus Figur 2 die Kippbewegung des Arretierriegels 33 zwischen der Arretierlage und der Freigabelage um seine Drehachse 33.1. Ebenfalls ist es denkbar, dass ein Stößel des Hubmagnets 60 direkt formschlüssig mit dem Übertragungselement 30 bzw. der entsprechenden Öffnung 35.1 und der Steuerführung 35.2 mechanisch zusammenwirkt. In diesem Fall stellt der Stößel des Hubmagnets 60 den Arretierriegel 33 dar. Der Hubmagnet 60 kann selbst zwei stabile Lagen aufweisen.

In der Figur 2 ist ferner eine Überlastkupplung 44 zwischen dem Drehmittel 21 und dem Übertragungselement 30 angedeutet. Diese Überlastkupplung 44 sorgt für eine mechanische Entkopplung der beiden Bauteil 21 (Drehmittel) und 24 (Verbindungsteil), damit bei einer unzulässigen Krafteinwirkung auf das Drehmittel 21 (z. B. durch Gewalt oder Aufbruchsversuch) eine Zerstörung der erfindungsgemäßen Verriegelungsvorrichtung 10 sicher verhindert wird. Außerdem kann somit sichergestellt werden, dass die Verriegelungsvorrichtung 10 nicht ungewollt die Verriegelung des Sperrbolzens 40 mit dem Funktionsbauteil löst. Wie bereits erwähnt worden ist, kann die Überlastkupplung 44 auch zwischen dem Übertragungselement 30 und dem Sperrbolzen 40 angeordnet sein.

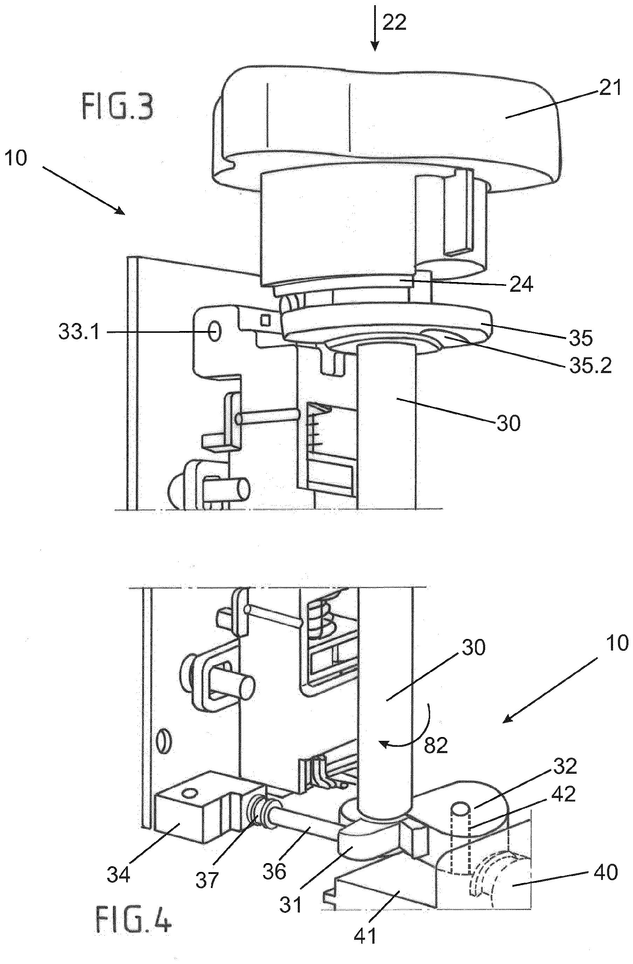

Figur 3 zeigt eine schematische Detailansicht der erfindungsgemäßen Verriegelungsvorrichtung 10, insbesondere eines Betätigungselements 20, das mit einem Kragenelement 35 eines Übertragungselements 30 durch ein Verbindungsteil 24 mechanisch verbunden ist. Das Betätigungselement 20 schließt das Drehmittel 21 und ein nicht dargestelltes Druckmittel 22 ein. Der Arretierriegel 33 befindet sich in seiner Arretierlage und greift in die Öffnung 35.1 (s. Fig. 2) am Kragenelement 35 des Übertragungselements 30 ein, wodurch die Verriegelungsposition der Verriegelungsvorrichtung 10 und des Sperrbolzens 40 erreicht wird. In dieser Figur 3 ist die Steuerkurve 35.2 deutlich an der Unterseite des Kragenelements 35 zu erkennen. Die Steuerkurve 35.2 ist hierbei als bogenförmiges Langloch ausgestaltet.

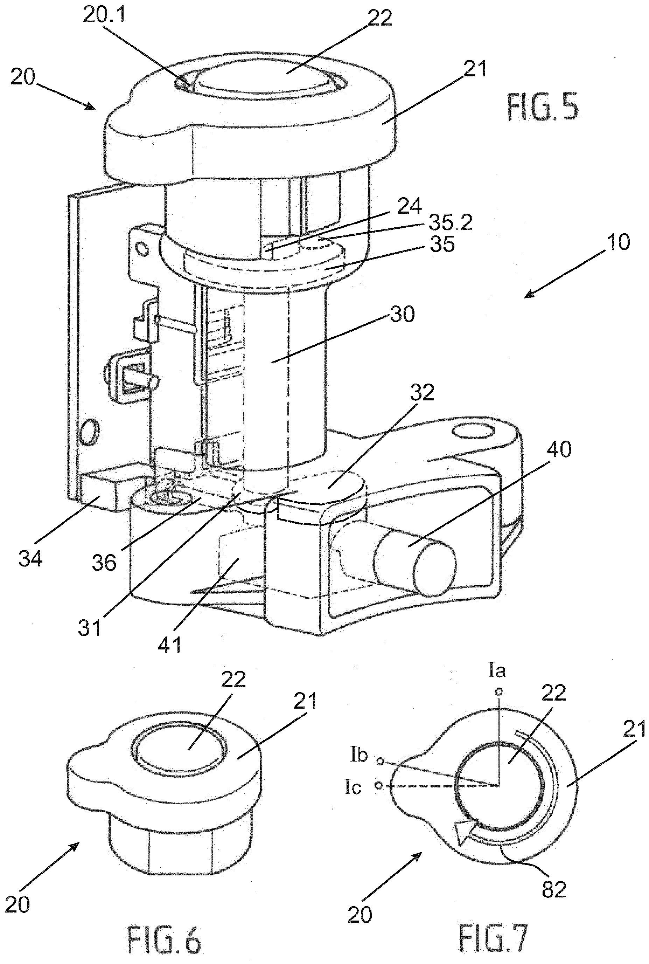

Figur 4 stellt eine Detailansicht der erfindungsgemäßen Verriegelungsvorrichtung 10 ohne Gehäuse 70 dar, umfassend ein Übertragungselement 30, einen ersten 31 und einen zweiten Steuernocken 32, einen Stößel 36, einen Schalter 34 und einen Sperrbolzen 40. Im dargestellten Ausführungsbeispiel der vorliegenden Erfindung sind der erste 31 und der zweite Steuernocken 32 einstückig zum Übertragungselement 30 ausgeführt. Der erste Steuernocken 31 wirkt mit einem Stößel 36 derart zusammen, dass bei einem Drehen des Übertragungselements 30 im Uhrzeigersinn (Richtung des Pfeils 82) der Schalter 34 durch Berührung eines Schaltknopfes 37 durch den Stößel 36 betätigt wird, um beispielsweise die Wegfahrsperre zu deaktivieren oder das Kommunikationssystem vom Fahrzeug einzuschalten. Dieses entspricht einer Bewegung des Drehmittels 21 von Figuren 1 bis 3 in seine Entriegelungsstellung Ia, wie in Figur 7 gezeigt ist. Dabei wird ein Schieber 41 in einer angedeuteten Steuerführung 42 an der unteren Seite des zweiten Steuernockens 32 zwangsgeführt, wobei der Sperrbolzen 40 derart mit dem Schieber 41 zusammenwirkt, dass ein nicht dargestelltes Funktionsbauteil des Fahrzeugs mechanisch entriegelt wird. Bei einer Bewegung des Übertragungselements 30 in eine entgegengesetzte Richtung zum Pfeil 82 wird der Schalter 34 ausgeschaltet, indem der Druckkontakt des Stößels 36 und des Schaltknopfes 37 des Schalters 34 aufgelöst wird, wodurch beispielsweise die Wegfahrsperre und das Kommunikationssystem sowie auch ggf. die Zündung für den Motor ausgeschaltet wird. Dieses entspricht einer Bewegung des Drehmittels 21 im Gegenuhrzeigersinn in seine Verriegelungsstellung Ib, entgegengesetzte Richtung zu Pfeil 82 in Figur 7. Nach dem umgekehrten Verlauf des Schiebers 41 in der Steuerführung 42 des zweiten Steuernockens 32 wird der Sperrbolzen 40 mechanisch in seine Verriegelungsposition IIb bezüglich des Funktionsbauteils durch eine Zwangsführung überführt.

Figur 5 zeigt, ähnlich wie die Figur 1, eine dreidimensionale Ansicht der erfindungsgemäßen Verriegelungsvorrichtung 10, die ein Betätigungselement 20 mit einem Drehmittel 21 und einem Druckmittel 22, ein Übertragungselement 30, einen Schalter 34 und einen Sperrbolzen 40 aufweist. Zwischen dem Drehmittel 21 und dem Druckmittel 22 ist ein Spalt 20.1 eingehalten, um eine separate Handhabung der Bauteile 21, 22 zu ermöglichen. Ferner ist das Drehmittel 21 rotationssymmetrisch platzsparend um das Druckmittel 22 angeordnet. Das Übertragungselement 30 ist in diesem Ausführungsbeispiel mit einem ersten Steuernocken 31 und einem zweiten Steuernocken 32 versehen. Der erste Steuernocken 31 führt einen Stößel 36, der auf den Schalter 34 einwirken kann, um die Elektronik des Fahrzeugs ein- bzw. auszuschalten. Der Sperrbolzen 40 wirkt formschlüssig mit einem Schieber 41 zusammen, wobei der Schieber 41 durch den zweiten Steuernocken 32 geführt wird. Das Übertragungselement 30 weist ein dem Betätigungselement 20 zugewandtes Kragenelement 35 auf, wobei das Übertragungselement 30 und das Betätigungselement 20 durch ein Verbindungsteil 24 drehfest miteinander verbunden sind.

Figuren 6 und 7 zeigen ein Betätigungselement 20 in einer Seiten- und einer Draufsicht. Das Betätigungselement 20 weist das Drehmittel 21 und das Druckmittel 22 auf. Das Drehmittel 21 ist in die Richtung 82 drehbar, wobei durch diese Drehung das Drehmittel 21 von einer stabilen Verriegelungsstellung Ib in eine stabile Entriegelungsstellung Ia überführbar ist. Dazwischen ist auch eine Zwischenstellung denkbar, z. B. eine ACC-Stellung. Beim Drehen des Drehmittels 21 in eine umgekehrte Richtung (zu Pfeil 82) aus der Entriegelungsstellung Ia wird die Verriegelungsstellung Ib wieder erreicht. Es kann ebenfalls eine instabile Weckstellung Ic des Drehmittels 21 vorgesehen sein, um die Sende-/Empfangseinheit manuell zu wecken (Active-Keyless-Vorrichtung). Die instabile Weckstellung Ic kann dadurch realisiert werden, dass eine Breite der Öffnung 35.1 im Kragenelement 35 zum formschlüssigen Aufnehmen des Arretierriegels 33 in der Verriegelungsstellung Ib des Drehmittels 21 etwas größer ausgeführt wird als eine Breite des Arretierriegels 33. Somit wird eine durch ein geringfügiges Spiel begrenzte Bewegung des Drehmittels 21 zum Aufwecken der Sende-/Empfangseinheit erlaubt. Beim Drehen des Drehmittels 21 aus einer stabilen Verriegelungsstellung Ib in eine entgegengesetzte Richtung der Richtung 82 wird somit die instabile Weckstellung Ic des Drehmittels 21 erreicht. Alternativ zur instabilen Weckstellung Ic des Drehmittels 21 kann ein Drucktaster oder ein kapazitiver Sensor vorgesehen sein, um die Sende-/Empfangseinheit zu wecken und einen Weckzustand des Fahrzeugs zu erreichen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

### Bezugszeichenliste

- 10: Verriegelungsvorrichtung
- 20: Betätigungselement
- 20.1: Spalt zwischen dem Drehmittel und Druckmittel
- 21: Drehmittel
- 22: Druckmittel
- 23: Stützfeder
- 24: Verbindungsteil
- 30: Übertragungselement
- 31: erster Steuernocken
- 32: zweiter Steuernocken
- 33: Arretierriegel
- 34: Schalter
- 35: Kragenelement des Übertragungselements 30
- 35.1: Öffnung
- 35.2: Steuerkurve
- 36: Stößel zum Betätigen des Schalters 34
- 37: Schaltknopf
- 40: Sperrbolzen
- 41: Schieber
- 42: Steuerführung
- 44: Überlastkupplung
- 50: Sende-/Empfangseinheit
- 51: ID-Geber
- 52: Authentifizierungsanfrage
- 60: Hubmagnet
- 70: Gehäuse
- 80: Achse
- 82: Pfeil für Drehrichtung
- Ia: Entriegelungsstellung des Drehmittels 21
- Ib: Verriegelungsstellung des Drehmittels 21
- Ic: instabile Weckstellung des Drehmittels 21

## Patentansprüche

1. Verriegelungsvorrichtung (10) für ein Funktionsbauteil eines Fahrzeugs, insbesondere eines Lenkers oder einer Schaltraste eines Motorrads, mit einem Betätigungselement (20), das mit einem Übertragungselement (30) in Wirkverbindung bringbar ist,
einem Sperrbolzen (40) zum Ver- und Entriegeln des Funktionsbauteils des Fahrzeugs, der mit dem Übertragungselement (30) in Wirkverbindung steht,
einer Sende-/Empfangseinheit (50), die einen Datenaustausch mit wenigstens einem mobilen ID-Geber (51) ermöglicht, um eine Authentisierungsabfrage (52) des ID-Gebers (51) durchzuführen,
wobei nach einer erfolgreichen Authentisierungsabfrage (52) des ID-Gebers (51) durch die Sende-/Empfangseinheit (50) eine Arretierung zwischen dem Betätigungselement (20) und dem Sperrbolzen (40) mittels eines Arretierriegels (33) aufgehoben wird, wobei das Betätigungselement (20) ein Drehmittel (21) und ein, insbesondere separates Druckmittel (22) aufweist,
wobei durch eine Aufhebung der Arretierung zwischen dem Betätigungselement (20) und dem Sperrbolzen (40) das Drehmittel (21) in mindestens zwei stabile Stellungen, nämlich eine Ver- und eine Entriegelungsstellung (Ib, Ia) bringbar ist,
und wobei in der Verriegelungsstellung (Ib) des Drehmittels (21) der Sperrbolzen (40) in eine Verriegelungsposition (IIb) und
in der Entriegelungsstellung (Ia) des Drehmittels (21) der Sperrbolzen (40) in eine Entriegelungsposition (IIa) mechanisch überführbar ist, und
wobei das Druckmittel (22) zum Starten eines Motors des Fahrzeugs vorgesehen ist, insbesondere wenn sich das Drehmittel (21) in der Entriegelungsstellung (Ia) befindet, **dadurch gekennzeichnet, dass** das Drehmittel (21) mindestens eine instabile Weckstellung (Ic) aufweist, wobei durch eine Bewegung des Drehmittels (21) in die instabile Weckstellung (Ic) die Sende-/Empfangseinheit (50) geweckt wird, um einen mobilen ID-Geber (51) abzufragen,
wobei das Übertragungselement (30) ein Kragenelement (35) aufweist, das mit einer Öffnung (35.1) und einer Steuerkurve (35.2) an seiner Unterseite zum Aufnehmen des Arretieriegels (33) versehen ist,
wobei eine Breite die Öffnung (35.1) in dem Kragenelement (35) zum formschlüssigen Aufnehmen des Arretierriegels (33) in der Verriegelungsstellung (Ib) des Drehmittels (21) etwas größer ausgeführt wird als eine Breite des Arretierriegels ( 33).

2. Verriegelungsvorrichtung (10) nach Anspruch 1, **dadurch gekennzeichnet, dass** die Verriegelungsvorrichtung (10) einen Näherungssensor aufweist, der insbesondere in der Verriegelungsvorrichtung (10) angeordnet ist, wobei die Sende-/Empfangseinheit (50) geweckt wird, wenn der Näherungssensor einen ID-Geber (51) und/oder einen Fahrer detektiert, um die Authentisierungsabfrage (52) durchzuführen.

3. Verriegelungsvorrichtung (10) nach einem der vorhergehenden Ansprüche, **dadurch gekennzeichnet, dass** nach einer erfolgreichen Authentisierungsabfrage (52) des ID-Gebers (51) durch die Sende-/Empfangseinheit (50) wenigstens ein Teil der Elektronik, insbesondere eine Wegfahrsperre, des Fahrzeugs aktiviert wird.

4. Verriegelungsvorrichtung (10) nach Anspruch 3, **dadurch gekennzeichnet, dass** ein Schalter (34) über eine Bewegung des Drehmittels (21) mittels des Übertragungselementes (30), insbesondere eines ersten Steuernockens (31) betätigt wird, um wenigstens einen Teil oder die gesamte Elektronik des Fahrzeugs einzuschalten.

5. Verriegelungsvorrichtung (10) nach einem der vorhergehenden Ansprüche, **dadurch gekennzeichnet, dass** nach einer erfolgreichen Authentisierungsabfrage (52) eines ID-Gebers (51) durch die Sende-/Empfangseinheit (50) ein Hubmagnet (60) aktiviert wird.

6. Verriegelungsvorrichtung (10) nach Anspruch 5, **dadurch gekennzeichnet, dass** der Hubmagnet (60) mit dem Arretierriegel (33) zusammenwirkt, um eine Wirkverbindung zwischen dem Betätigungselement (20) und dem Übertragungselement (30) mittels des Arretierriegels (33) freizugeben, wobei insbesondere der Hubmagnet (60) zwei stabile Lagen aufweist, eine Freigabelage und eine Arretierlage bezüglich des Arretierriegels (33).

7. Verriegelungsvorrichtung (10) nach Anspruch 5 oder 6, **dadurch gekennzeichnet, dass** der Hubmagnet (60) in seiner Arretierlage eine Drehbewegung des Übertragungselementes (30) gegen eine unerlaubte Handhabung mittels des Arretierriegels (33) arretiert.

8. Verriegelungsvorrichtung (10) nach einem der vorhergehenden Ansprüche, **dadurch gekennzeichnet, dass** das Drehmittel (21) federbelastet ist.

9. Verriegelungsvorrichtung (10) nach einem der vorhergehenden Ansprüche, **dadurch gekennzeichnet, dass** der Sperrbolzen (40) durch das Übertragungselement (30), insbesondere mittels eines zweiten Steuernockens (32) zwischen der Ver- und Entriegelungsposition (IIb, IIa) mechanisch zwangsgeführt wird, um das Funktionsbauteil eines Fahrzeugs mechanisch zu ver- oder entriegeln.

10. Verriegelungsvorrichtung (10) nach einem der vorhergehenden Ansprüche, **dadurch gekennzeichnet, dass** das Drehmittel (21) in der Entriegelungsstellung (Ia) die Zündung des Motors, insbesondere über den Schalter (34) einschaltet.

11. Verriegelungsvorrichtung (10) nach einem der vorhergehenden Ansprüche, **dadurch gekennzeichnet, dass** eine Überlastkupplung (44) zwischen dem Betätigungselement (20) und dem Sperrbolzen (40) vorgesehen ist, insbesondere zwischen dem Betätigungselement (20) und dem Übertragungselement (30), um ein gewaltsames Betätigen der Verriegelungsvorrichtung zu verhindern.

12. Verriegelungsvorrichtung (10) nach einem der vorhergehenden Ansprüche, **dadurch gekennzeichnet, dass** die Verriegelungsvorrichtung (10) eine elektronische Schnittstelle zu einem Tankdeckel aufweist, um den Tankdeckel zu öffnen.

13. Verriegelungsvorrichtung (10) nach einem der vorhergehenden Ansprüche, **dadurch gekennzeichnet, dass** die Verriegelungsvorrichtung (10) einen Transponder, insbesondere eine Transponderspule unter dem Drehmittel (21), aufweist, um den mobilen ID-Geber (51) mit Energie zu versorgen für den Datenaustausch zwischen der Sende-/Empfangseinheit (50) und dem mobilen ID-Geber (51), wenn der ID-Geber ( 51) nicht mehr über die erforderliche Energie verfügt.

14. Verfahren zum Bedienen einer Verriegelungsvorrichtung (10) nach einem der vorhergehenden Ansprüchen mit den folgenden Schritten:
• Durchführen einer Authentisierungsabfrage (52) eines ID-Gebers (51), um ein Betätigungselement (20) freizugeben, wobei das Betätigungselement (20) ein Drehmittel (21) und ein, insbesondere separates Druckmittel (22) aufweist,
• Aktivieren von zumindest einem Teil der Elektronik des Fahrzeugs, insbesondere mit Hilfe des Drehmittels (21),
• Einschalten der Zündung des Motors des Fahrzeugs mit Hilfe des Drehmittels (21),
• Starten des Motors des Fahrzeugs mit Hilfe des Druckmittels (22),
**dadurch gekennzeichnet, dass**
das Drehmittel (21) mindestens eine instabile Weckstellung (Ic) aufweist, wobei durch eine Bewegung des Drehmittels (21) in die instabile Weckstellung (Ic) die Sende-/Empfangseinheit (50) geweckt wird, um einen mobilen ID-Geber (51) abzufragen,
wobei das Übertragungselement (30) ein Kragenelement (35) aufweist, das mit einer Öffnung (35.1) und einer Steuerkurve (35.2) an seiner Unterseite zum Aufnehmen des Arretieriegels (33) versehen ist,
wobei eine Breite die Öffnung (35.1) in dem Kragenelement (35) zum formschlüssigen Aufnehmen des Arretierriegels (33) in der Verriegelungsstellung (Ib) des Drehmittels (21) etwas größer ausgeführt wird als eine Breite des Arretierriegels ( 33).

## Claims

1. Locking device (10) for a functional component of a motor vehicle, in particular a handlebar or a shift peg of a motorcycle, with an actuating element (20) which can be brought into operative connection with a transmission element (30),
a blocking pin (40) for locking and unlocking the functional component of the motor vehicle that is in operative connection with the transmission element (30),
a transmitting/receiving unit (50) which enables data to be exchanged with at least one mobile ID transmitter (51) to perform an authentication query (52) of the ID transmitter (51),
wherein, after a successful authentication query (52) of the identification device (51) by the transmitting/receiving unit (50) a detent between the actuating element (20) and the blocking pin (40) is released by means of a detent bolt (33),
wherein the actuating element (20) includes a rotating means (21) and a particularly separate pressure means (22),
wherein the rotating means (21) can be brought into at least two stable positions, namely a locked and an unlocked position (Ib, Ia) by releasing the detent between the actuating element (20) and the blocking pin (40),
and wherein with the rotating means (21) in the locked position (Ib) the blocking pin (40) can be shifted mechanically into a locked position (IIb), and
with the rotating means (21) in the unlocked position (Ia) the blocking pin (40) can be shifted mechanically into an unlocked position (IIa), and
wherein the pressure means (22) is provided for starting the engine of the motor vehicle, particularly when the rotating means (21) is located in the locked position (Ia)
**characterized in that**
the rotating means (21) has at least one unstable waking position (Ic), wherein a motion of the rotating means (21) into the unstable waking position (Ic) wakes the transmitting/receiving unit (50) to challenge a mobile ID transmitter (51),
wherein the transmission element (30) has a collar element (35) which is furnished with an opening (35.1) and a control cam (35.2) on the underside thereof to accommodate the detent bolt (33),
wherein the opening (35.1) in the collar element (35) is designed slightly wider than a width of the detent bolt (33) to enable accommodation of the detent bolt (33) in positive locking manner when the rotating means (21) is in the locked position (Ib).

2. Locking device (10) according to Claim 1, **characterized in that** the locking device (10) includes a proximity sensor which is arranged in particular inside the locking device (10), wherein the transmitting/receiving unit (50) is woken up to carry out the authentication challenge (52) when the proximity sensor detects an ID transmitter (51) and/or a driver.

3. Locking device (10) according to any one of the preceding claims, **characterized in that** after a successful authentication challenge (52) of the ID transmitter (51) by the transmitting/receiving unit (50) at least some of the electronics, in particular an immobiliser of the vehicle is activated.

4. Locking device (10) according to Claim 3, **characterized in that** a switch (34) is actuated via a movement of the rotary means (21) by the transmission element (30), in particular by a first control cam (31), to switch on at least some or all of the electronics of the vehicle.

5. Locking device (10) according to any one of the preceding claims, **characterized in that** after a successful authentication challenge (52) of an ID transmitter (51) by the transmitting/receiving unit (50) a solenoid (60) is activated.

6. Locking device (10) according to Claim 5, **characterized in that** the solenoid (60) cooperates with the detent bolt (33) to release an operative connection between the actuating element (20) and the transmission element (30) by means of the detent bolt (33), wherein the solenoid (60) in particular has two stable positions, a release position and a detent position with respect to the detent bolt (33).

7. Locking device (10) according to Claim 5 or 6, **characterized in that** in its detent position the solenoid (60) locks a rotational movement of the transmission element (30) against unauthorised handling means of the detent bolt (33).

8. Locking device (10) according to any one of the preceding claims, **characterized in that** the rotating means (21) is spring-loaded.

9. Locking device (10) according to any one of the preceding claims, **characterized in that** the blocking pin (40) is mechanically forcibly moved between the locked and the unlocked position (IIb, IIa) by the transmission element (30), in particular by means of a second control cam (32), to mechanically lock or unlock the functional component of a vehicle.

10. Locking device (10) according to any one of the preceding claims, **characterized in that** in the unlocked position (Ia) the rotating means (21) switches on the ignition of the engine, in particular via the switch (34).

11. Locking device (10) according to any one of the preceding claims, **characterized in that** an overload clutch (44) is provided between the actuating element (20) and the blocking pin (40), in particular between the actuating element (20) and the transmission element (30) to prevent forcible actuation of the locking device.

12. Locking device (10) according to any one of the preceding claims, **characterized in that** the locking device (10) includes an electronic interface to a fuel tank filler cap for opening the filler cap.

13. Locking device (10) according to any one of the preceding claims, **characterized in that** the locking device (10), includes a transponder, particularly a transponder coil below the rotating means (21) to supply the mobile ID transmitter (51) with energy for exchanging data between the transmitting/receiving unit (50) and the mobile ID transmitter (51) when the ID transmitter (51) no longer has the required energy.

14. Method for operating a locking device (10) according to any one of the preceding claims, comprising the following steps:
• performing an authentication challenge (52) of an ID transmitter (51) to release an actuating element (20), wherein the actuating element (20) includes a rotating means (21) and a particularly separate pressure means (22),
• activating at least some of the electronics of the vehicle, especially with the aid of the rotating means (21),
• switching on the ignition of the vehicle engine with the aid of the rotating means (21),
• starting the engine of the vehicle engine with the aid of the pressure medium (22),
**characterized in that**
the rotating means (21) has at least one unstable waking position (Ic), wherein a motion of the rotating means (21) into the unstable waking position (Ic) wakes the transmitting/receiving unit (50) to challenge a mobile ID transmitter (51),
wherein the transmission element (30) has a collar element (35) which is furnished with an opening (35.1) and a control cam (35.2) on the underside thereof to accommodate the detent bolt (33),
wherein the opening (35.1) in the collar element (35) is designed slightly wider than a width of the detent bolt (33) to enable accommodation of the detent bolt (33) in positive locking manner when the rotating means (21) is in the locked position (Ib).

## Revendications

1. Dispositif de verrouillage (10) pour un composant fonctionnel d'un véhicule, notamment d'un guidon ou d'un cliquet de changement de vitesse d'un motocycle, avec un élément d'actionnement (20), qui peut être mis en liaison fonctionnelle avec un élément de transmission (30),
un boulon de blocage (40) pour verrouiller et déverrouiller le composant fonctionnel du véhicule, qui est en liaison fonctionnelle avec l'élément de transmission (30),
une unité émettrice/réceptrice (50), qui permet un échange de données avec au moins un détecteur d'identification (51) pour effectuer une interrogation d'authentification (52) du détecteur d'identification (51),
un blocage entre l'élément de commande (20) et le boulon de blocage (40) étant supprimé au moyen d'un verrou d'arrêt (33) par l'unité émettrice/réceptrice (50) après une interrogation d'authentification (52) réussie du générateur d'identification (51),
l'élément d'actionnement (20) comportant notamment un moyen rotatif (21) et notamment un moyen de pression (22) séparé,
le moyen rotatif (21) pouvant être mis dans au moins deux positions stables, notamment une position de verrouillage et une de déverrouillage (1b, 1a) par une suppression du blocage entre l'élément d'actionnement (20) et le boulon de blocage (40),
et dans la position de verrouillage (1b) du moyen rotatif (21), le boulon de blocage (40) pouvant être transféré mécaniquement dans une position de verrouillage (11b) et
dans une position de déverrouillage (Ia) du moyen rotatif (21), le boulon de blocage (40) pouvant être transféré mécaniquement dans une position de déverrouillage (11a), et
le moyen de pression (22) étant prévu pour mettre en marche un moteur de véhicule, notamment lorsque le moyen rotatif (21) se trouve dans la position de déverrouillage (Ia),
**caractérisé en ce que**
le moyen rotatif (21) comporte au moins une position de veille instable (lc), l'unité émettrice/réceptrice (50) étant réveillée dans la position de veille instable (1c) par un mouvement du moyen rotatif (21) pour interroger un générateur d'identification mobile (51),
l'élément de transmission (30) comportant un élément à collerette (35) qui est doté sur sa face inférieure d'une ouverture (35.1) et d'une came de commande (35.2) pour recevoir le verrou d'arrêt (33),
une largeur de l'ouverture (35.1) dans l'élément à collerette (35) pour recevoir par conformité de forme le verrou d'arrêt (33) dans la position de verrouillage (1b) du moyen rotatif (21) étant exécutée légèrement plus grande qu'une largeur du verrou d'arrêt (33).

2. Dispositif de verrouillage (10) selon la revendication 1, **caractérisé en ce que** le dispositif de verrouillage (10) comporte un détecteur de proximité, qui est notamment disposé dans le dispositif de verrouillage (10), l'unité émettrice/réceptrice (50) étant réveillée, lorsque le détecteur de proximité détecte un générateur d'identification (51) et/ou un conducteur pour exécuter l'interrogation d'authentification (52).

3. Dispositif de verrouillage (10) selon l'une quelconque des revendications précédentes, **caractérisé en ce qu'**au moins une partie du système électronique du véhicule, notamment un antidémarrage, est activée après une interrogation d'authentification (52) réussie du générateur d'identification (51) par l'unité émettrice/réceptrice (50).

4. Dispositif de verrouillage (10) selon la revendication 3, **caractérisé en ce qu'**un interrupteur (34) est actionné par un mouvement du moyen rotatif (21) au moyen de l'élément de transmission (30), notamment d'une première came de commande (31) pour enclencher au moins une partie ou tout le système électronique du véhicule.

5. Dispositif de verrouillage (10) selon l'une quelconque des revendications précédentes, **caractérisé en ce qu'**un aimant de levage (60) est activé par l'unité émettrice/réceptrice (50) après une interrogation d'authentification (52) réussie d'un générateur d'identification (51).

6. Dispositif de verrouillage (10) selon la revendication 5, **caractérisé en ce que** l'aimant de levage (60) agit simultanément avec le verrou d'arrêt (33) pour libérer une liaison fonctionnelle entre l'élément d'actionnement (20) et l'élément de transmission (30) au moyen du verrou d'arrêt (33), l'aimant de levage (60) comportant notamment deux positions stables, une position de libération et une position de blocage concernant le verrou d'arrêt (33).

7. Dispositif de verrouillage (10) selon la revendication 5 ou 6, **caractérisé en ce que** l'aimant de levage (60) dans sa position de blocage, bloque un mouvement rotatif de l'élément de transmission (30) contre une manipulation non autorisée au moyen du verrou d'arrêt (33) .

8. Dispositif de verrouillage (10) selon l'une quelconque des revendications précédentes, **caractérisé en ce que** le moyen rotatif (21) est contraint par ressort.

9. Dispositif de verrouillage (10) selon l'une quelconque des revendications précédentes, **caractérisé en ce que** le boulon de blocage (40) fait l'objet d'un guidage forcé mécaniquement par l'élément de transmission (30), notamment au moyen d'une deuxième came de commande (32) entre la position de verrouillage et de déverrouillage (11b, 11a) pour verrouiller ou déverrouiller mécaniquement le composant fonctionnel d'un véhicule.

10. Dispositif de verrouillage (10) selon l'une quelconque des revendications précédentes, **caractérisé en ce que** le moyen rotatif (21) dans la position de déverrouillage (la) enclenche l'allumage du moteur, notamment par l'interrupteur (34).

11. Dispositif de verrouillage (10) selon l'une quelconque des revendications précédentes, **caractérisé en ce qu'**un accouplement de surcharge (44) est prévu entre l'élément d'actionnement (20) et le boulon de blocage (40), notamment entre l'élément d'actionnement (20) et l'élément de transmission (30) pour éviter un actionnement forcé du dispositif de verrouillage.

12. Dispositif de verrouillage (10) selon l'une quelconque des revendications précédentes, **caractérisé en ce que** le dispositif de verrouillage (10) comporte une interface électronique pour un bouchon de réservoir pour ouvrir le bouchon de réservoir.

13. Dispositif de verrouillage (10) selon l'une quelconque des revendications précédentes, **caractérisé en ce que** le dispositif de verrouillage (10) comporte un transpondeur, notamment une bobine de transpondeur sous le moyen rotatif (21) pour alimenter le générateur d'identification mobile (51) en énergie pour l'échange de données entre l'unité émettrice/réceptrice (50) et le générateur d'identification mobile (51), lorsque le générateur d'identification (51) ne dispose plus de l'énergie nécessaire.

14. Procédé pour actionner un dispositif de verrouillage (10) selon l'une quelconque des revendications précédentes avec les étapes suivantes :
• exécution d'une interrogation d'authentification (52) d'un générateur d'identification (51) pour libérer un élément d'actionnement (20), l'élément d'actionnement (20) comportant un moyen rotatif (21) et notamment un moyen de pression séparé (22),
• activation d'au moins une partie du système électronique du véhicule, notamment à l'aide du moyen rotatif (21),
• enclenchement de l'allumage du moteur du véhicule à l'aide du moyen rotatif (21),
• mise en marche du moteur du véhicule à l'aide du moyen de pression (22),
**caractérisé en ce que**
le moyen rotatif (21) comporte au moins une position de veille instable (1c), l'unité émettrice/réceptrice (50) étant réveillée par un mouvement du moyen rotatif (21) dans la position de veille instable (1c) pour interroger un générateur d'identification mobile (51), l'élément de transmission (30) comportant un élément à collerette (35) qui est doté d'une ouverture (35.1) et d'une came de commande (35.2) sur sa face inférieure pour recevoir le verrou d'arrêt (33),
une largeur de l'ouverture (35.1) dans l'élément à collerette (35) pour recevoir par conformité de forme le verrou d'arrêt (33) dans la position de verrouillage (1b) du moyen rotatif (21) étant exécutée légèrement plus grande qu'une largeur du verrou d'arrêt (33).
